# EUROPÄISCHE PATENTSCHRIFT

(11) **EP 0 664 599 B1**
(45) Veröffentlichungstag und Bekanntmachung des Hinweises auf die Patenterteilung: **27.08.1997**
(21) Anmeldenummer: 95100288.0
(22) Anmeldetag: 11.01.1995
(51) Int. Cl.: H02K 23/08, H02P 7/00

(54) **Kommutatormotor**
Commutator motor
Moteur à commutateur

(30) Priorität: 21.01.1994 DE 4401686
(43) Veröffentlichungstag der Anmeldung: 26.07.1995
(73) Patentinhaber: KARL M. REICH MASCHINENFABRIK GmbH, 72622 Nürtingen (DE)
(72) Erfinder: Raichle, Dieter, D-72622 Nürtingen (DE); Haas, Günter,Dipl.-Ing., D-72622 Nürtingen (DE)
(74) Vertreter: Patentanwälte Bartels und Partner

(56) Entgegenhaltungen:
- EP-A- 0 235 735
- FR-A- 1 032 388
- FR-A- 1 363 675

## Beschreibung

Die Erfindung betrifft einen wendepollosen Kommutatormotor, der die Merkmale des Oberbegriffs des Anspruches 1 aufweist.

Ein derartiger kommutatormotor ist in der EP-A-0 235 735 beschrieben.

Bei solchen Motoren ist es zur Erzielung einer guten Kommutierung notwendig, die kommutierenden Spulen in einer Ebene anzuordnen, die gegenüber der Mittelebene zwischen einander gegenüberliegenden Polen des Statorblechpaketes entgegen der Drehrichtung des Rotors verschwenkt ist, was durch eine entsprechende Verschwenkung des Bürstenapparates und/oder durch eine sogenannte Vorschaltung der Spulenenden am Kommutator erreicht werden kann. In der entgegengesetzten Drehrichtung ist dann aber die Kommutierung sehr schlecht, so daß in dieser Drehrichtung der Motor nicht betrieben werden kann.

Ist ein derartiger Kommutatormotor in eine Handwerkzeugmaschine als Antriebsmotor eingebaut, bei der eine Umkehrung der Drehrichtung möglich sein muß, um beispielsweise Schrauben eindrehen und herausdrehen zu können, dann läßt sich ein noch annehmbares Leistungsgewicht nur dann erreichen, wenn der Bürstenapparat bei der Umkehrung der Drehrichtung verstellt wird, um bei beiden Drehrichtungen die kommutierenden Spulen in eine Lage bezüglich des von der Feldwicklung erzeugten Hauptfeldes zu bringen, in der eine gute Kommutierung erreicht werden kann.

Da solche Einrichtungen zur Umkehrung der Drehrichtung aufwendig sind, liegt der Erfindung die Aufgabe zugrunde, einen wendepollosen Kommutatormotor zu schaffen, bei dem der Aufwand für die Umkehrbarkeit der Drehrichtung verringert ist. Diese Aufgabe löst ein Kommutatormotor mit den Merkmalen des Anspruches 1.

Bei der erfindungsgemäßen Lösung ist in der Vorzugsdrehrichtung eine gute Kommutierung auch bei maximaler Leistung gewährleistet, weil durch eine Verdrehung des Bürstenapparates und/oder eine Vorschaltung der Spulen der Rotorwicklung deren kommutierende Spulen sich in einer für eine gute Kommutierung erforderlichen Lage befinden. Dennoch läßt sich auch in der entgegengesetzten Drehrichtung noch eine brauchbare Kommutierung erreichen, da bei dieser Drehrichtung die erhöhte Windungszahl der Feldwicklung zu einem höheren Feldwiderstand und zu einem verstärkten magnetischen Fluß führt, was beides die Kommutierung erleichtert. Dies gilt auch für die durch die Verstärkung des magnetischen Flusses erfolgende Drehzahlabsenkung. Daß nur in der Vorzugsdrehrichtung die volle Motorleistung zur Verfügung steht, ist bei vielen Anwendungen, beispielsweise bei einem Schrauber, nicht störend, weil das für das Herausdrehen der Schrauben erforderliche Drehmoment geringer ist als das für das Eindrehen der Schrauben. Der Aufwand für die erfindungsgemäße Lösung ist sehr gering, weil ein verdrehbarer Bürstenapparat durch ortsfest angeordnete Bürsten ersetzt wird und die Feldwicklung nur so ausgebildet zu sein braucht, daß sie mit unterschiedlichen Windungszahlen betrieben werden kann, wozu ein einfacher Schalter genügt, mittels dessen auch die Stromrichtung im Rotor umgekehrt wird. Hinzu kommt noch, daß in der Vorzugsdrehrichtung der Motor noch besser ausgenutzt werden kann als bei den bekannten Kommutatormotoren mit umkehrbarer Drehrichtung, weil der Motor für die Vorzugsdrehrichtung sowohl hinsichtlich des Rotors als auch des Stators und der Kommutierungseinrichtung optimal ausgelegt werden kann.

Bei einer bevorzugten Ausführungsform besteht jeder der beiden auf den Polen des Statorblechpaketes angeordneten Feldwicklungsteile aus einer ersten und einer zweiten Spule, von denen letztere nur bei einer Wahl der der Vorzugsdrehrichtung entgegengesetzten Drehrichtung im Motorstromkreis liegen. Da in dieser Drehrichtung der Motorstrom geringer ist als in der Vorzugsdrehrichtung, haben die zweiten Spulen vorteilhafterweise einen kleineren Drahtdurchmesser als die beiden ersten Spulen.

Vorzugsweise ist der Schalter der Einrichtung zur Umkehr der Drehrichtung als ein zweipoliger Wendeschalter ausgebildet. Hierdurch wird der Aufwand für den Motor ebenfalls verringert.

Bei Verwendung eines solchen Wendeschalters kann man die beiden ersten Spulen der Feldwicklung einerseits mit dem Netz, also dem in der Regel vorhandenen Netzschalter, verbinden und andererseits mit der Eingangsseite des Wendeschalters. Von den beiden zweiten Spulen ist dann das eine Ende mit der einen bzw. anderen Bürste und das andere Ende mit demjenigen Anschluß der Ausgangsseite des Wendeschalters verbunden, der bei der Wahl der der Vorzugsdrehrichtung entgegengesetzten Drehrichtung im Motorstromkreis liegt. Weiterhin sind dann die beiden Anschlüsse der Ausgangsseite des Wendeschalters, die bei der Wahl der Vorzugsdrehrichtung im Motorstromkreis liegen, derart direkt mit den Bürsten verbunden, daß sich eine vertauschte Zuordnung der Bürsten zu den ersten Spulen im Vergleich zu der Zuordnung bei der der Vorzugsdrehrichtung entgegengesetzten Drehrichtung ergibt.

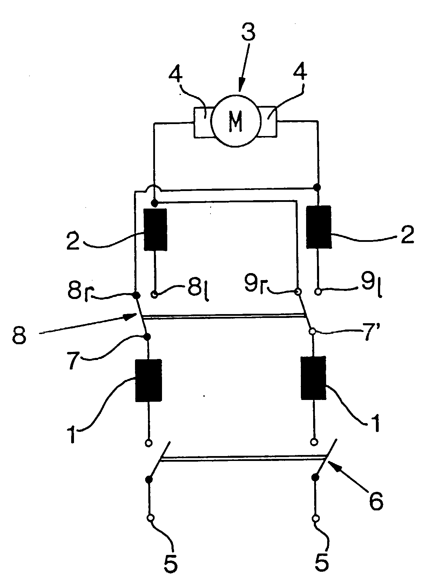

Im folgenden ist die Erfindung anhand eines in der Zeichnung dargestellten Ausführungsbeispiels dargestellt. Die einzige Figur zeigt das Schaltbild des Ausführungsbeispiels.

Ein wendepolloser Kommutatormotor, der als Universalmotor ausgeführt ist und beispielsweise in einem als Schrauber ausgebildeten Elektrohandwerkzeug als Antriebsmotor eingesetzt werden kann, weist ein nicht dargestelltes Motorgehäuse auf, in dem ein ebenfalls nicht dargestelltes Statorblechpaket festgelegt ist, das zwei einander gegenüberliegend angeordnete Pole bildet. Beide Pole tragen je die eine Hälfte einer Feldwicklung. Jede dieser beiden Hälften der Feldwicklung besteht aus einer ersten Feldspule 1 und einer von der ersten Feldspule getrennt ausgeführten Feldspule 2, deren Draht einen geringeren Durchmesser hat als der Draht der ersten Feldspulen 1. Im Gehäuse ist ferner eine nicht dargestellte Rotorwelle eines als Ganzes mit 3 bezeichneten Rotors drehbar gelagert. Der Rotor 3 weist ein mit der Rotorwicklung bewickeltes Rotorblechpaket sowie einen Kommutator auf, an dessen Segmente die Wicklungsenden der einzelnen, die Rotorwicklung bildenden Spulen angeschlossen sind. An diametralen Stellen des Kommutators liegen die Bürsten 4 eines im übrigen nicht dargestellten Bürstenapparates an, der im Motorgehäuse festgelegt ist.

Der gesamte Motor ist für die eine Drehrichtung, die im folgenden als Vorzugsdrehrichtung bezeichnet ist und bei einem Schrauber der Drehrichtung entspricht, mit der die Schraube eingedreht wird, optimiert. In der Vorzugsdrehrichtung wird deshalb eine hohe Ausnutzung der Maschine und damit eine hohe Leistung erreicht. Insbesondere gilt die Optimierung für die Wahl der Windungszahl der beiden ersten Feldspulen 1 und für die festgelegte Bürstenverschiebung, die natürlich auch teilweise oder vollständig durch eine Vorschaltung der Spulen der Rotorwicklung am Kommutator erreicht werden kann.

An zwei Netzanschlußpole 5, bei denen es sich um die beiden Steckerstifte eines Netzsteckers handeln kann, ist ein zweipoliger Netzschalter 6 angeschlossen, über den der Motor an das Netz gelegt und vom Netz abgetrennt werden kann. Bei dem Netz kann es sich selbstverständlich auch um eine Batterie handeln. Wie das Schaltbild zeigt, ist mit dem Netzschalter 6 das eine Ende der beiden ersten Feldspulen 1 direkt verbunden. Das andere Ende ist an den einen bzw. anderen eingangsseitigen Anschluß 7 bzw. 7' eines zweipoligen Wendeschalters 8 angeschlossen, dessen mit dem Anschluß 7 verbindbare Ausgänge mit 8ᵣ und 8ₗ bezeichnet sind, während die mit dem Anschluß 7' verbindbaren Ausgänge mit 9ᵣ bzw. 9ₗ bezeichnet sind. Die Ausgänge 8ᵣ und 9ᵣ sind in der im Schaltbild dargestellten Schalterstellung, mit der die Vorzugsdrehrichtung ausgewählt ist, mit den Anschlüssen 7 bzw. 7' verbunden. Im Ausführungsbeispiel entspricht die Vorzugsdrehrichtung einem Rechtslauf des Motors. Die Ausgänge 8₁ und 9₁ sind mit den Anschlüssen 7 bzw. 7' verbunden, wenn die entgegengesetzte Drehrichtung, also der Linkslauf, gewählt ist.

Bei der Wahl der Vorzugsdrehrichtung verbindet der Wendeschalter 8 direkt die beiden ersten Feldspulen 1 mit der einen bzw. anderen Bürste 4.

In der anderen Schaltstellung des Wendeschalters 8, wenn also der Ausgang 8₁ mit dem Anschluß 7 und der Ausgang 9₁ mit dem Anschluß 7' verbunden ist, sind die beiden Feldspulen 1 jeweils über die auf demselben Pol des Statorblechpaketes angeordnete zweite Feldspule 2 mit der jeweils anderen Bürste 4 verbunden, mit der sie in der Schaltstellung für die Vorzugsdrehrichtung nicht direkt verbunden sind. Hierdurch wird zum einen erreicht, daß der Motorstrom den Rotor in der entgegengesetzten Drehrichtung durchfließt. Zum anderen wird durch die Reihenschaltung aus den ersten und zweiten Feldspulen eine Erhöhung des Feldwiderstandes und eine Vergrößerung des magnetischen Erregerflusses erreicht. Sowohl der höhere Feldwiderstand als auch der höhere Erregerfluß tragen dazu bei, daß bis zu einer zwar gegenüber der maximalen Leistung in der Vorzugsdrehrichtung geringeren, aber im Anwendungsfall noch ausreichenden Leistung eine brauchbare Kommutierung erreicht wird, obwohl die Bürsten für diese Drehrichtung in der falschen Richtung versetzt sind.

## Patentansprüche

1. Wendepolloser Kommutatormotor, insbesondere als Antrieb einer Handwerkzeugmaschine, mit
a) einer von den Polen seines in einem Motorgehäuse festgelegten Statorblechpaketes getragenen Feldwicklung,
b) einer an den Kommutator angeschlossenen Rotorwicklung, deren kommutierende Spulen eine Ebene definieren, die gegenüber der in der Mitte zwischen einander gegenüberliegenden Polen des Statorblechpaketes liegenden Mittelebene um die Motorlängsachse verdreht ist,
c) einem Bürstenapparat (4), dessen Bürsten am Kommutator an diametral liegenden Stellen anliegen, und
d) einer Einrichtung zur Umkehrung der Drehrichtung mit einem Schalter (8) für die Umkehr der Stromrichtung in der Rotorwicklung,
dadurch gekennzeichnet, daß
e) der Bürstenapparat (4) unverschiebbar im Motorgehäuse angeordnet ist,
f) die Verdrehung der von den kommutierenden Spulen definierten Ebene so gewählt ist, daß in einer der beiden Drehrichtungen bei voller Motorleistung eine gute Kommutierung gewährleistet ist, und
g) der Schalter (8) der Einrichtung zur Umkehrung der Drehrichtung in derjenigen Schaltstellung, welche die der Verdrehung der von den kommutierenden Spulen definierten Ebene gegenüber der Mittelebene zugeordnete Vorzugsdrehrichtung ergibt, eine kleinere Zahl von Windungen der Feldwicklung (1, 2) in den Motorstromkreis legt als in der entgegengesetzten Drehrichtung des Motors.

2. Motor nach Anspruch 1, dadurch gekennzeichnet, daß jeder der auf den Polen des Statorblechpaketes angeordneten Feldwicklungsteile aus einer ersten (1) und einer zweiten Feldspule (2) besteht.

3. Motor nach Anspruch 2, dadurch gekennzeichnet, daß die beiden zweiten Spulen (2) der Feldwicklung nur bei einer Wahl der der Vorzugsdrehrichtung entgegengesetzten Drehrichtung im Motorstromkreis liegen.

4. Motor nach Anspruch 3, dadurch gekennzeichnet, daß die beiden zweiten Spulen (2) der Feldwicklung einen kleineren Drahtdurchmesser haben als die beiden ersten Spulen (1).

5. Motor nach einem der Ansprüche 1 bis 4, dadurch gekennzeichnet, daß der Schalter (8) der Einrichtung zur Umkehrung der Drehrichtung ein zweipoliger Wendeschalter ist.

6. Motor nach Anspruch 5, dadurch gekennzeichnet, daß
a) die beiden ersten Spulen (1) der Feldwicklung einerseits mit dem Netz verbindbar und andererseits mit der Eingangsseite des Wendeschalters (8) verbunden sind,
b) von den beiden zweiten Spulen (2) der Feldwicklung das eine Ende mit der einen bzw. anderen Bürste (4) und das andere Ende mit demjenigen Anschluß am Ausgang des Wendeschalters (8) verbunden ist, der bei der Wahl der der Vorzugsdrehrichtung entgegengesetzten Drehrichtung im Motorstromkreis liegt, und
c) die beiden Anschlüsse (8ᵣ, 8ₗ) auf der Ausgangsseite des Wendeschalters (8), die bei der Wahl der Vorzugsdrehrichtung im Motorstromkreis liegen, direkt mit den Bürsten (4) derart verbunden sind, daß sich eine vertauschte Zuordnung der Bürsten (4) zu den beiden ersten Spulen (1) im Vergleich zu der Zuordnung für die der Vorzugsdrehrichtung entgegengesetzte Drehrichtung ergibt.

7. Motor nach einem der Ansprüche 1 bis 6, dadurch gekennzeichnet, daß bei einer Verwendung als Antrieb für einen Schrauber oder eine als Schrauber einsetzbare Bohrmaschine die Vorzugsdrehrichtung der Drehrichtung für das Eindrehen der Schrauben zugeordnet ist.

## Claims

1. Commutator motor without commutating poles, in particular for use as the drive of a hand-held tool, with
a) a field coil borne by the poles of its multi-layered stator which is secured in a motor casing;
b) a rotor coil which is connected to the commutator, the commutating coils of which define a plane, which is rotated about the longitudinal axis of the motor in relation to the central plane which is located in the centre between poles of the multi-layered stator which poles are opposite one another;
c) a brushing device (4), the brushes of which abut on the commutator at diametrically located positions; and
d) a device for the reversal of the direction of rotation with a switch (8) for the reversal of the current direction in the rotor coil;
characterised in that
e) the brush apparatus (4) is disposed in a non-displaceable manner in the motor casing;
f) the rotation of the plane defined by the commutating coils is selected such that in one of the two rotational directions, in the case of full motor output, a good commutation is provided; and
g) the switch (8) of the device lays, for reversal of the rotational direction into the switching position, which, in each case, produces the rotation of the plane defined by the commutating coils in relation to the preferred direction of rotation allocated to the central plane, a lower number of coils of the field coil (1, 2) in the motor current circuit than in the opposite direction of rotation of the motor.

2. Motor according to Claim 1, characterised in that each of the field coil parts which is disposed on the poles of the multi-layered stator consists of a first sealed coil (1) and a second sealed coil (2).

3. Motor according to Claim 2, characterised in that the two second coils (2) of the field coil are only in the motor current circuit in the case of the selection of the direction of rotation which is opposite to the preferred direction of rotation.

4. Motor according to Claim 3, characterised in that the two second coils (2) of the sealed coil have a smaller wire diameter than the two first coils (1).

5. Motor according to any one of Claims 1 to 4, characterised in that the switch (8) of the device for the reversal of the rotational direction is a 2-pole reversing switch.

6. Motor according to Claim 5, characterised in that
a) the two first coils (1) of the field coil can be connected on the one hand to the network, and, on the other hand, to the input side of the switching circuit (8);
b) of the two second coils (2) of the field coil the one end is connected to one or other brush (4) and the other end is connected to the connection at the output of the reversing switch (8), which is located in the motor current circuit when the direction of rotation which is opposite the preferred direction of rotation is selected; and
c) the two connections (8ᵣ, 8ₗ) on the output side of the reversing switch (8) which, if the preferred direction of rotation is selected, are located in the motor current circuit, are connected directly to the brushes (4) in such a manner that there results exchanged allocation of the brushes (4) to the two first coils (1) in comparison to the arrangement for the direction of rotation that is reversed in relation to the preferred direction of rotation.

7. Motor according to any one of Claims 1 to 6, characterised in that in the case of an application as a drive for a screwdriver or a drilling machine which may be used as a screwdriver, the preferred direction of rotation is allocated to the direction of rotation for screwing-in screws.

## Revendications

1. Moteur à collecteur sans pôles auxiliaires, en particulier sous forme de moteur d'entraînement d'un outil électrique à main, comportant
a) un bobinage de champ porté par les pôles de son paquet de tôles de stator fixé dans le carter du moteur,
b) un bobinage de rotor, relié au collecteur, dont les bobines dans lesquelles se fait l'inversion du sens du courant définissent un plan qui a pivoté autour de l'axe longitudinal du moteur par rapport au plan médian situé au milieu, entre les pôles, se faisant face l'un l'autre, du paquet de tôles de stator,
c) un porte-balais (4) dont les balais s'appuient sur le collecteur en des positions diamétralement opposées, et
d) un dispositif pour l'inversion du sens du courant, présentant un inverseur (8) pour l'inversion du sens du courant dans le bobinage du rotor,
caractérisé par le fait que
e) le porte-balais (4) est disposé dans le carter du moteur, sans possibilité de coulissement,
f) le pivotement du plan défini par les bobines dans lesquelles se fait l'inversion du sens du courant est choisi de façon qu'à pleine puissance une bonne inversion du sens du courant se fasse dans l'un des deux sens de rotation, et
g) l'inverseur (8) du dispositif d'inversion du sens du courant place dans le circuit du courant du moteur, dans la position d'inversion qui donne le sens de rotation préférentiel correspondant au pivotement, par rapport au plan médian, du plan défini par les bobines dans lesquelles se fait l'inversion du sens du courant, un plus petit nombre de spires du bobinage de champ (1, 2) que dans le sens de rotation opposé du moteur.

2. Moteur selon la revendication 1, caractérisé par le fait que chacune des parties du bobinage de champ disposées sur les pôles du paquet de tôles du stator est constituée d'une première (1) et d'une seconde (2) bobines de champ.

3. Moteur selon la revendication 2, caractérisé par le fait que les deux secondes bobines (2) du bobinage de champ ne se trouvent dans le circuit de courant du moteur que lors d'un choix du sens de rotation opposé au sens de rotation préférentiel.

4. Moteur selon la revendication 3, caractérisé par le fait que les secondes bobines (2) du bobinage de champ ont un diamètre de fil conducteur inférieur à celui des deux premières bobines (1, 1).

5. Moteur selon l'une des revendications 1 à 4, caractérisé par le fait que l'inverseur (8) du dispositif d'inversion du sens de rotation est un inverseur bipolaire.

6. Moteur selon la revendication 5, caractérisé par le fait que
a) les deux premières bobines (1) du bobinage de champ d'une part peuvent être reliées au réseau et d'autre part sont reliées au côté sortie de l'inverseur (8),
b) des deux secondes bobines (2) du bobinage de champ, la première extrémité est reliée avec l'un ou avec l'autre balai (4) et l'autre extrémité est reliée à celle des bornes, situées à la sortie de l'inverseur (8), qui se trouve dans le circuit du courant du moteur lors du choix du sens de rotation opposé au sens de rotation préférentiel, et
c) les deux bornes (8ᵣ, 8ₗ) qui sont situées du côté de la sortie de l'inverseur (8) et qui, lors du choix du sens de rotation préférentiel, se trouvent dans le circuit du courant du moteur, sont directement reliées aux balais (4) de façon à établir une association permutée des balais (4) avec les deux premières bobines (1) en comparaison de l'association pour le sens de rotation opposé au sens de rotation préférentiel.

7. Moteur selon l'une des revendications 1 à 6, caractérisé par le fait qu'en cas d'emploi comme moteur d'entraînement pour une visseuse ou pour une perceuse utilisable en visseuse, le sens de rotation préférentiel correspond au sens de rotation pour visser les vis.
